# EUROPEAN PATENT SPECIFICATION

(11) **EP 2 488 040 B1**
(45) Date of publication and mention of the grant of the patent: **29.04.2015**
(21) Application number: 10771210.1
(22) Date of filing: 13.10.2010
(51) Int. Cl.: A23B 5/14, A23L 3/3472, A23L 3/3499, A23L 3/3508, A23L 1/30, A23L 1/24

(54) **ANTI-OXIDANT COMPOSITION**
ANTIOXIDATIONSZUSAMMENSETZUNG
COMPOSITION ANTIOXYDANTE

(30) Priority: 15.10.2009 GB 0918074; 08.07.2010 GB 201011487
(43) Date of publication of application: 22.08.2012
(73) Proprietor: DuPont Nutrition Biosciences ApS, 1001 Copenhagen K. (DK)
(72) Inventor: MÅNSSON, Lars, DK-8220 Brabrand (DK)
(74) Representative: Alcock, David
(86) International application number: PCT/IB2010/054637
(87) International publication number: WO 2011/045757

(56) References cited:
- WO-A1-97/32947
- SIZOVA N V ET AL: "Content of antioxidants in plant extracts obtained by supercritical extraction", PHARMACEUTICAL CHEMISTRY JOURNAL, KLUWER ACADEMIC PUBLISHERS-CONSULTANTS BUREAU, NE, vol. 40, no. 4, 1 April 2006 (2006-04-01), pages 206-210, XP019437033, ISSN: 1573-9031, DOI: DOI:10.1007/S11094-006-0093-8
- BENTAYEB K ET AL: "Direct determination of carnosic acid in a new active packaging based on natural extract of rosemary", ANALYTICAL AND BIOANALYTICAL CHEMISTRY, SPRINGER, BERLIN, DE, vol. 389, no. 6, 16 October 2007 (2007-10-16), pages 1989-1996, XP019559837, ISSN: 1618-2650, DOI: DOI:10.1007/S00216-007-1570-Y
- LEE K-G ET AL: "DETERMINATION OF ANTIOXIDANT POTENTIAL OF VOLATILE EXTRACTS ISOLATED FROM VARIOUS HERBS AND SPICES", JOURNAL OF AGRICULTURAL AND FOOD CHEMISTRY, AMERICAN CHEMICAL SOCIETY, US, vol. 50, no. 17, 14 August 2002 (2002-08-14), pages 4947-4952, XP009071206, ISSN: 0021-8561, DOI: DOI:10.1021/JF0255681
- WANG MINGFU ET AL: "Analysis of antioxidative phenolic compounds in artichoke (Cynara scolymus L.)", JOURNAL OF AGRICULTURAL AND FOOD CHEMISTRY, AMERICAN CHEMICAL SOCIETY, US, vol. 51, no. 3, 29 January 2003 (2003-01-29), pages 601-608, XP002413656, ISSN: 0021-8561, DOI: DOI:10.1021/JF020792B

## Description

The present invention relates to a composition that exhibits an anti-oxidant action.

### Background

Antioxidants are widely used in food products susceptible to oxidative degeneration. An antioxidant is defined by the Food and Drug Administration (21CFR 170.3) as "a substance used to preserve food by retarding deterioration, rancidity, or discoloration due to oxidation". There is an increasing need to develop economical, natural and effective food preservative systems to meet the public demand for convenient, natural, safe, healthy, good quality food products with guaranteed shelf life. To this end spices or plant extracts can be used in food as antioxidants and to impart flavour. One advantage of such extracts is that they are perceived as natural ingredients when compared to chemical antioxidants such as ethylenediaminetetraacetic acid (EDTA), butyl hydroxyanisol (BHA) and butylated hydroxytoluene (BHT).

There are large number of antioxidants known based on naturally occurring plant materials. It is noted that these materials have varying degrees of efficacy. Moreover, the antioxidant levels required to ensure preservation safety may prove uneconomical, or are above levels acceptable due to regulatory and legislation constraints when present in amounts sufficient to offer the required protection.

Sizova N V Et Al: "Content Of Antioxidants In Plant Extracts Obtained By Supercritical Extraction", Pharmaceutical Chemistry Journal, Kluwer Academic Publishers-Consultants Bureau, Ne, Vol. 40, No. 4, 1 April 2006 (2006-04-01), Pages 206-210 relates to the content of natural antioxidants in extracts of medicinal plants, fruits, and seeds obtained by supercritical fluid extraction was determined by a microcalorimetric technique using the model reaction of induced cumene oxidation. Among the preparations studied, the maximum concentrations of antioxidants were found in the extracts of sage, rosemary, cranberry and carrot. The most active antioxidants are those contained in the rosemary extract. It is suggested that the most active components are tocopherols, polyphenols, and quinones.

Bentayeb K Et Al: "Direct Determination Of Carnosic Acid In A New Active Packaging Based On Natural Extract Of Rosemary", Analytical And Bioanalytical Chemistry, Springer, Berlin, De, Vol. 389, No. 6, 16 October 2007 (2007-10-16), Pages 1989-1996 relates to an antioxidant film that incorporates a natural extract of rosemary and is intended for contact with food. The rosemary extract was been screened and carnosic acid and carnosol are said to be determined as the major antioxidant components that are responsible for the antioxidant properties of the whole extract.

Lee K-G Et AI: "Determination Of Antioxidant Potential Of Volatile Extracts Isolated From Various Herbs And Spices", Journal Of Agricultural And Food Chemistry, American Chemical Society, Us, Vol. 50, No. 17, 14 August 2002 (2002-08-14), Pages 4947-4952, relates to antioxidant activities of volatile extracts isolated from thyme, basil, rosemary, chamomile, lavender, and cinnamon as evaluated by two independent assays: The antioxidant activities of the extracts are taught to decrease in the following order in both of the lipophilic assay systems: thyme > basil > rosemary > chamomile > lavender and cinnamon.

WO9732947 relates to a product enriched and supplemented with additives including organic and inorganic antioxidants. The organic antioxidants include plant-derived polyphenols which are preferably different from those naturally present in olive oil, and optionally vitamins, and said inorganic antioxidants include selenium-based derivatives. The production process includes the following stages: dehydration of the polyphenols, dissolution of the polyphenols in glycerol, mixing, preparation of oily solutions of the vitamins, mixing of the compounds and of the inorganic antioxidants with an amount of oil such as to support a dispersion of the enriching substances which is 20 times higher than the concentration which the finished product is to have.

The present invention alleviates the problems of the prior art.

In one aspect the present invention provides an anti-oxidant composition comprising
(a) an extract obtained from a plant, wherein the plant is rosemary,(b) an extract obtained from a plant of the genus *Matricaria* or of the genus *Chamaemelum.*
   In one aspect the present invention provides a process for preventing and/or inhibiting oxidation of a foodstuff, the process comprising the step of contacting the foodstuff with (a) an extract obtained from a plant wherein the plant is rosemary, and
(b) an extract obtained from a plant of the genus *Matricaria* or of the genus *Chamaemelum.*

In one aspect the present invention provides use of
(a) an extract obtained from a plant wherein the plant is rosemary, and
(b) an extract obtained from a plant of the genus *Matricaria* or of the genus *Chamaemelum,*
for preventing and/or inhibiting oxidation of a foodstuff.

In one aspect the present invention provides kit for preparing a composition as defined herein, the kit comprising
(a) an extract obtained from a plant wherein the plant is rosemary, and
(b) an extract obtained from a plant of the genus *Matricaria* or of the genus *Chamaemelum,*
in separate packages or containers; with instructions for admixture and/or contacting and/or use.

Aspects of the invention are defined in the appended claims.

The present invention provides a synergistic combination of components for preventing and/or inhibiting oxidation in a material, such as foodstuff. This combination of components allows lower levels of the antioxidants to be used to provide effective action. This is particularly important in food applications where reduction of dosage is desired for commercial and regulatory reasons.

It will be understood by one skilled in the art that by the term 'antioxidant' it is meant a substance which reduces the amount of oxidation over a given period when compared to the oxidation that would occur in the absence of that substance or it is a meant a material which increase the time required for a given amount of oxidation to occur when compared to the oxidation that would occur in the absence of that substance.

Plants of the family *Labiatae* contain several well known herbs. Extracts from these plants have been shown to have antioxidant and, in some cases, antimicrobial activity (Nychas & Skandamis, 2003; Smid and Gorris, 1999; Loliger, 1989). Such extracts may be essential oils and oleoresins (extracts with essential oil content used in flavours and fragrances) or "deodorised"', extracts that have a high phenolic diterpene content and low level of flavour-inducing compounds.

Essential oils are extracted by simple steam distillation of the plant material. The most effective antioxidant compounds in rosemary used are reported to be carnosic acid, carnosol and rosmarinic acid (Cuvelier *et al.* 1996). Carnosic acid, a phenolic diterpene (C₂₀H₂₈O₄), occurs naturally in leaves of. Dried leaves of rosemary contain 1.5 - 2.5% carnosic acid and 0.3 - 0.4% carnosol (US6231896). Carnosol is an oxidative artefact of carnosic acid (Wenkert et al. J. Org. Chem 30:2931, 1965). The oxidation takes place in the presence of harvesting in the leaves left to dry in the air and if the leaves are subjected to extraction with solvents. Rosmanol may also be a product of the oxidation of carnosic acid.

Rosemary has antioxidant activity in foods that is mainly related to phenolic diterpenes such as carnosic acid and carnosol, as well as other phenolic compounds, including phenolic triterpenes such as betulinic acid, oleanolic acid and ursolic acid; and rosmarinic acid. The phenolic diterpenes, phenolic triterpenes and rosmarinic acid are distinct from the essential oils and oleoresins that are often used in flavours and fragrances. The high flavour and odour levels of essential oils is not conducive to their use in food.

Of plants of the genus *Matricaria* or of the genus *Chamaemelum,* such as chamomile, are also known to have antioxidant activity. This is mainly related to flavones such as apigenin-7-*O*-glucoside (A7G) and its derivatives, as well as other flavones.

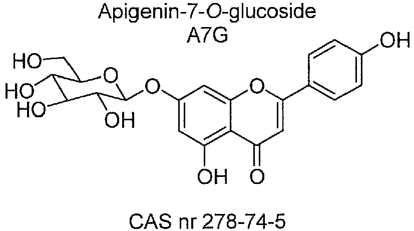

Details of A7G and its derivatives are disclosed by Svehlíková, V et al Phytochemistry, 2004, 35, 2323. As for the active antioxidants of *Labiatae* plant family, the antioxidants from plants of the genus *Matricaria* or of the genus *Chamaemelum* are distinct from the essential oils and oleoresins that are often used in flavours and fragrances. The high flavour and odour levels of essential oils is not conducive to their use in food.

One skilled in the art would expect a combination of an extract of rosemary and an extract from a plant of the genus *Matricaria* or of the genus *Chamaemelum,* to provide a simple additive antioxidant effect. However, studies described herein have demonstrated synergistic enhancement of antioxidant activity.

For ease of reference, these and further aspects of the present invention are now discussed under appropriate section headings. However, the teachings under each section are not necessarily limited to each particular section.

### PREFERRED ASPECTS

### ROSEMARY EXTRACT

As discussed herein one extract used in the present invention is obtained from the plant rosemary.

It will be appreciated by one skilled in the art that by the term "extract" or "extracts" it is meant any constituent of the plant which may be isolated from the whole plant.

The invention comprises use of a combination of an extract from rosemary (*Rosmarinus officinalis*) and antioxidant material obtained a plant of the genus *Matricaria* or of the genus *Chamaemelum* (*Matricaria recurtita*), that together give antioxidant activity in a food system. The extracts responsible for synergy in the present invention preferably refer to extracts of rosemary that have been selectively extracted ("deodorised extracts") to increase their phenolic diterpene content (such as carnosic acid). These deodorised extracts can be distinguished by their high phenolic diterpene content (for example greater than 3.5 wt.%) and their low level (less than 1 wt.%) of flavour-inducing compounds from plant essential oils and oleoresins that are used as flavours or fragrances. Essential oils are typically extracted by simple steam distillation of the plant material.

Essential oils comprise the various essential oils in plants having the odour or the flavour of the plant from which they were extracted. The essential oils are typically terpenoids often comprising monoterpenes. For example an antioxidant type of rosemary extract, which could be described as selectively extracted or deodorised, contains > 3.5% wt.% phenolic diterpenes but less than 1 wt.% essential oils. A non-selective, flavouring extract contains 10-30 wt.% essential oils and a phenolic diterpene content of 2->3.5wt.%.

An essential oil is commonly described as the volatile ethereal fraction obtained from a plant or plant part by a physical separation process such as distillation or chromatographic separation. Essential oils have also been described as a "group of odorous principles, soluble in alcohol and to a limited extent in water, consisting of a mixtures of esters, aldehydes, ketones and terpenes. Essential oils are typically obtained by distilling plants with water; the oil that separates from distillate usually has highly characteristic odors identified with the plant origin. The resulting mixture of organic compounds was thought, in the days of alchemists, to be the essence of the plant, hence the term "essential oil".

In one preferred aspect the extract is a deodorised extract. Preferably the (deodorised) extract contains from 1.0 to 70 wt.% phenolic diterpenes, preferably 3.5 to 70 wt.% phenolic diterpenes and less than 1 wt.% essential oil. In one aspect the extract obtained from rosemary contains phenolic diterpenes in an amount of at least 1wt% based on the weight of extract obtained from rosemary, such as in an amount of 1 to 95 wt% based on the weight of extract obtained from rosemary, such as in an amount of 1 to 90 wt% based on the weight of extract obtained from rosemary, such as in an amount of 1 to 85 wt% based on the weight of extract obtained from rosemary, such as in an amount of 1 to 70 wt% based on the weight of extract obtained from rosemary, such as in an amount of 1 to 50 wt% based on the weight of extract obtained from rosemary, such as in an amount of 1 to 30 wt% based on the weight of extract obtained from rosemary, such as in an amount of 1 to 20 wt% based on the weight of extract obtained from rosemary, such as in an amount of 1 to 15 wt% based on the weight of extract obtained from rosemary, such as in an amount of 1 to 10 wt% based on the weight of extract obtained from rosemary.

In one preferred aspect the extract is or comprises a phenolic diterpene. Preferably the phenolic diterpene is carnosic acid.

In one aspect the extract obtained from rosemary contains carnosic acid in an amount of at least 1wt% based on the weight of extract obtained from rosemary, such as in an amount of 1 to 95 wt% based on the weight of extract obtained from rosemary, such as in an amount of 1 to 90 wt% based on the weight of extract obtained from rosemary, such as in an amount of 1 to 85 wt% based on the weight of extract obtained from rosemary, such as in an amount of 1 to 70 wt% based on the weight of extract obtained from rosemary, such as in an amount of 1 to 50 wt% based on the weight of extract obtained from rosemary, , such as in an amount of 1 to 40 wt% based on the weight of extract obtained from rosemary such as in an amount of 1 to 30 wt% based on the weight of extract obtained from rosemary, such as in an amount of 1 to 25 wt% based on the weight of extract obtained from rosemary, such as in an amount of 1 to 20 wt% based on the weight of extract obtained from rosemary, such as in an amount of 1 to 10 wt% based on the weight of extract obtained from rosemary, such as in an amount of 1 to 5 wt% based on the weight of extract obtained from rosemary.

In one preferred aspect the extract contains flavour-inducing compounds and/or essential oils in an amount of less than 1 wt.% based on the extract. In one preferred aspect the extract contains flavour-inducing compounds and/or essential oils in an amount of less than 1 wt.% based on the composition.

Typically flavour-inducing compounds and/or essential oils are camphor, verbenone, borneol and alfa-terpineol.

In one preferred aspect the combined amount of camphor present in the extract is less than 1 wt.% (preferably less than 0.2 wt.%, more preferably less than 0.15wt.%, more preferably less than 0.1wt.%) based on the extract.

In one preferred aspect the combined amount of verbenone present in the extract is less than 1 wt.% (preferably less than 0.2 wt.%, more preferably less than 0.15wt.%, more preferably less than 0.1wt.%) based on the extract.

In one preferred aspect the combined amount of borneol present in the extract is less than 1 wt.% (preferably less than 0.2 wt.%, more preferably less than 0.15wt.%, more preferably less than 0.1wt.%) based on the extract.

In one preferred aspect the combined amount of alfa-terpineol present in the extract is less than 1 wt.% (preferably less than 0.2 wt.%, more preferably less than 0.15wt.%, more preferably less than 0.1wt.%) based on the extract.

In one preferred aspect the combined amount of camphor, verbenone, borneol and alfa-terpineol present in the extract is less than 1 wt.% (preferably less than 0.2 wt.%, more preferably less than 0.15wt.%, more preferably less than 0.1wt.%) based on the extract.

In one preferred aspect the extract contain less than 1 wt.% of plant essential oils and/or oleoresins based on the extract. In one preferred aspect the extract contain less than 1 wt.% of plant essential oils and/or oleoresins based on the composition.

In one preferred aspect the extract contains essential oils in an amount of less than 1 wt.% based on the extract. In one preferred aspect the extract contains essential oils in an amount of less than 1 wt.% based on the composition.

The extract is obtained from rosemary (*Rosmarinus officinalis* L.).

### MATRICARIA/CHAMAEMELUM EXTRACT

As discussed herein one extract used in the present invention is obtained from a plant of the genus *Matricaria* or of the genus *Chamaemelum.*

Plants of the genus *Matricaria* and plants of the genus *Chamaemelum* are commonly referred to as chamomile.

In one aspect the extract is obtained from a plant of the genus *Matricaria.*

In one aspect the extract is obtained from a plant of the genus *Chamaemelum.*

In one aspect extract (b) is from a plant selected from plants of the species *Matricaria recurtita, Ormenis multicaulis, Eriocephalus punctulatus, Chamaemelum nobile (syn Anthemis nobilis), Anthemis arvensis, Anthemis cotula, Anthemis tinctoria and Matricaria discoidea.* In one preferred aspect extract (b) is from a plant of the species *Matricaria recurtita.*

In one aspect the extract is a mixture of extract obtained from a plant of the genus *Matricaria* and extract obtained from a plant of the genus *Chamaemelum.*

It will be appreciated by one skilled in the art that by the term "extract" or "extracts" it is meant any constituent of the plant which may be isolated from the whole plant.

The invention comprises use of a combination of an extract from a plant of the genus *Matricaria* or of the genus *Chamaemelum,* such as chamomile (*Matricaria recurtita*) and antioxidant material obtained from rosemary that together give antioxidant activity in a food system.

In one preferred aspect the extract is or comprises a flavone. Preferably the flavone is apigenin-7-O-glucoside or a derivative thereof. Preferred derivatives of apigenin-7-O-glucoside are apigenin-7-*O*-(6"-malonyl-glucoside) and apigenin-7-*O*-(4"-acetyl-6"-malonyl-glucoside). Thus in one aspect the flavone is selected from apigenin-7-*O-*glucoside, apigenin-7-*O*-(6"-malonyl-glucoside), apigenin-7-*O*-(4"-acetyl-6"-malonyl-glucoside) and mixtures thereof. In one further aspect the flavone is at least apigenin-7-*O*-glucoside and optionally one or both of apigenin-7-*O*-(6"-malonyl-glucoside) and apigenin-7-*O*-(4"-acetyl-6"-malonyl-glucoside). In further preferred aspects the extract is or comprises
- apigenin-7-*O*-glucoside, apigenin-7-*O*-(6"-malonyl-glucoside) and apigenin-7-*O-*(4"-acetyl-6"-malonyl-glucoside); or
- apigenin-7-*O*-glucoside and apigenin-7-*O*-(6"-malonyl-glucoside); or
- apigenin-7-*O*-glucoside and apigenin-7-*O*-(4"-acetyl-6"-malonyl-glucoside); or
- apigenin-7-*O*-(6"-malonyl-glucoside) and apigenin-7-*O*-(4"-acetyl-6"-malonyl-glucoside); or
- apigenin-7-*O*-glucoside; or
- apigenin-7-*O*-(6"-malonyl-glucoside) ; or
- apigenin-7-*O*-(4"-acetyl-6"-malonyl-glucoside)

In one aspect the flavone is apigenin-7-*O*-glucoside.

The structures of apigenin-7-*O*-(6"-malonyl-glucoside) and apigenin-7-*O*-(4"-acetyl-6"-malonyl-glucoside) are shown below

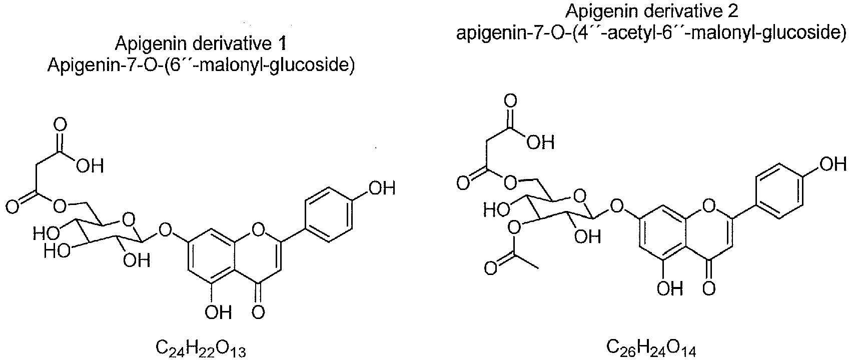

In one aspect the extract obtained from a plant of the *Chamaemelum* family contains apigenin-7-*O*-glucoside, apigenin-7-*O*-(6"-malonyl-glucoside) and apigenin-7-*O*-(4"-acetyl-6"-malonyl-glucoside) in an combined amount of at least 0.1wt% based on the weight of extract obtained from the plant of the genus *Matricaria* or of the genus *Chamaemelum,* such as in an amount of at least 0.2wt% based on the weight of extract obtained from the plant of the genus *Matricaria* or of the genus *Chamaemelum,* such as in an amount of at least 0.5wt% based on the weight of extract obtained from the plant of the genus *Matricaria* or of the genus *Chamaemelum,* such as in an amount of 0.1 to 20wt% based on the weight of extract obtained from the plant of the genus *Matricaria* or of the genus *Chamaemelum,* such as in an amount of 0.1 to 10wt% based on the weight of extract obtained from the plant of the genus *Matricaria* or of the genus *Chamaemelum,* such as in an amount of 0.1 to 5 wt% based on the weight of extract obtained from the plant of the genus *Matricaria* or of the genus *Chamaemelum,* such as in an amount of 0.2 to 3 wt% based on the weight of extract obtained from the plant of the genus *Matricaria* or of the genus *Chamaemelum,* such as in an amount of 0.2 to 2 wt% based on the weight of extract obtained from the plant of the genus *Matricaria* or of the genus *Chamaemelum,* such as in an amount of 0.5 to 2 wt% based on the weight of extract obtained from the plant of the genus *Matricaria* or of the genus *Chamaemelum.* It will be understood by one skilled in the art that one or more of apigenin-7-*O*-glucoside, apigenin-7-*O*-(6"-malonyl-glucoside) and apigenin-7-*O*-(4"-acetyl-6"-malonyl-glucoside) may not be present provided the combined total amounts of apigenin-7-*O*-glucoside, apigenin-7-*O*-(6"-malonyl-glucoside) and apigenin-7-*O*-(4"-acetyl-6"-malonyl-glucoside) which are present is within the recited range.

In one aspect the extract obtained from a plant of the *Chamaemelum* family contains apigenin-7-*O*-glucoside in an amount of at least 0.1wt% based on the weight of extract obtained from the plant of the genus *Matricaria* or of the genus *Chamaemelum,* such as in an amount of at least 0.2wt% based on the weight of extract obtained from the plant of the genus *Matricaria* or of the genus *Chamaemelum,* such as in an amount of at least 0.5wt% based on the weight of extract obtained from the plant of the genus *Matricaria* or of the genus *Chamaemelum,* such as in an amount of 0.1 to 20wt% based on the weight of extract obtained from the plant of the genus *Matricaria* or of the genus *Chamaemelum,* such as in an amount of 0.1 to 10wt% based on the weight of extract obtained from the plant of the genus *Matricaria* or of the genus *Chamaemelum,* such as in an amount of 0.1 to 5 wt% based on the weight of extract obtained from the plant of the genus *Matricaria* or of the genus *Chamaemelum,* such as in an amount of 0.2 to 3 wt% based on the weight of extract obtained from the plant of the genus *Matricaria* or of the genus *Chamaemelum,* such as in an amount of 0.2 to 2 wt% based on the weight of extract obtained from the plant of the genus *Matricaria* or of the genus *Chamaemelum,* such as in an amount of 0.5 to 2 wt% based on the weight of extract obtained from the plant of the genus *Matricaria* or of the genus *Chamaemelum.*

In one preferred aspect the plant of the genus *Matricaria* or of the genus *Chamaemelum* is chamomile. It will be understood that these name cover all species and varieties of plants known by these names. In one preferred aspect the plant of the genus *Matricaria* or of the genus *Chamaemelum* is a plant of the species *Matricaria recurtita.* It is noted that this species may also be known as *Matricaria chamomilla.*

### COMPOSITION

It will be understood that the components of the composition utilised in the present invention may be present in any amount to provide an antioxidant effect and in particular
(a) extract obtained from rosemary and
(b) extract obtained from a plant of the genus *Matricaria* or of the genus *Chamaemelum,* are present in amounts to provide a synergistic anti-oxidant effect.

In one aspect the ratio of (a) extract obtained from rosemary, to (b) extract obtained from a plant of the genus *Matricaria* or of the genus *Chamaemelum,* is from 30:1 to 1:20, such as 30:1 to 1:1, such as 20:1 to 1:20, such as 20:1 to 1:1, such as 15:1 to 1:20, such as 15:1 to 1:1, such as 10:1 to 1:20, such as 10:1 to 1:1, such as 5:1 to 1:20, such as 5:1 to 1:1., such as 1:1 to 1:15 , such as 1:1 to 1:10, such as 1:1 to 1:5, such as 1:1 to 1:2, such as approximately 1:1.

In one aspect the ratio of (a) active anti-oxidant ingredient obtained from rosemary, to (b) active anti-oxidant ingredient obtained from a plant of the genus *Matricaria* or of the genus *Chamaemelum,* is from 85:1 to 1:10, such as 85:1 to 1:5, such as 85:1 to 1:2, such as 85:1 to 1:1, such as 85:1 to 2:1, such as 85:1 to 5:1, such as 85:1 to 10:1, such as 85:1 to 15:1, such as 85:1 to 20:1, such as 70:1 to 1:1, such as 60:1 to 1:1, such as 50:1 to 1:1, such as 40:1 to 1:1, such as 30:1 to 1:1, such as 25:1 to 1:1, such as 20:1 to 1:1. In one aspect the ratio of (a) active anti-oxidant ingredient obtained from rosemary, to (b) active anti-oxidant ingredient obtained from a plant of the genus *Matricaria* or of the genus *Chamaemelum,* is from 15:1 to 1:1, such as 10:1 to 1:1, such as 70:1 to 10:1, such as 60:1 to 10:1, such as 50:1 to 10:1, such as 40:1 to 10:1, such as 30:1 to 10:1, such as 25:1 to 15:1. In one aspect the ratio of (a) active anti-oxidant ingredient obtained from rosemary, to (b) active anti-oxidant ingredient obtained from a plant of the genus *Matricaria* or of the genus *Chamaemelum,* is from 15:1 to 1:1, such as 15:1 to 2:1, such as 15:1 to 5:1, such as 15:1 to 10:1, such as 14:1 to 11:1, such as 13:1 to 11:1.

In one aspect the ratio of (a) phenolic diterpene, to (b) flavone, is from 85:1 to 1:10, such as 85:1 to 1:5, such as 85:1 to 1:2, such as 85:1 to 1:1, such as 85:1 to 2:1, such as 85:1 to 5:1, such as 85:1 to 10:1, such as 85:1 to 15:1, such as 85:1 to 20:1, such as 70:1 to 1:1, such as 60:1 to 1:1, such as 50:1 to 1:1, such as 40:1 to 1:1, such as 30:1 to 1:1, such as 25:1 to 1:1, such as 20:1 to 1:1. In one aspect the ratio of (a) phenolic diterpene, to (b) flavone, is from 15:1 to 1:1, such as 10:1 to 1:1, such as 70:1 to 10:1, such as 60:1 to 10:1, such as 50:1 to 10:1, such as 40:1 to 10:1, such as 30:1 to 10:1, such as 25:1 to 15:1 In one aspect the ratio of (a) phenolic diterpene, to (b) flavone, is from 15:1 to 1:1, such as 15:1 to 2:1, such as 15:1 to 5:1, such as 15:1 to 10:1, such as 14:1 to 11:1, such as 13:1 to 11:1..

In one aspect the ratio of (a) carnosic acid, to (b) apigenin-7-O-glucoside, is from 85:1 to 1:10, such as 85:1 to 1:5, such as 85:1 to 1:2, such as 85:1 to 1:1, such as 85:1 to 2:1, such as 85:1 to 5:1, such as 85:1 to 10:1, such as 85:1 to 15:1, such as 85:1 to 20:1, such as 70:1 to 1:1, such as 60:1 to 1:1, such as 50:1 to 1:1, such as 40:1 to 1:1. In one aspect the ratio of (a) carnosic acid, to (b) apigenin-7-O-glucoside, is from 30:1 to 1:1, such as 25:1 to 1:1, such as 20:1 to 1:1, such as 15:1 to 1:1, such as 10:1 to 1:1, such as 70:1 to 10:1, such as 60:1-to 10:1, such as 50:1 to 10:1, such as 40:1 to 10:1, such as 30:1 to 10:1, such as 25:1 to 15:1. In one aspect the ratio of (a) carnosic acid, to (b) apigenin-7-O-glucoside, is from 40:1 to 1:1, such as 40:1 to 5:1, such as 40:1 to 10:1, such as 40:1 to 15:1, such as 40:1 to 20:1, such as 40:1 to 25:1, such as 40:1 to 30:1, such as 35:1 to 30:1.

### APPLICATIONS

The antioxidant composition may be utilised in any application in which inhibition of oxidation is required. As discussed herein, usage in foodstuffs is found to be particularly advantageous. In one aspect the present invention therefore provides
- a process for preventing and/or inhibiting oxidation of a material, the process comprising the step of contacting the material with
   (a) an extract obtained from rosemary, and
   (b) an extract obtained from a plant of the genus *Matricaria* or of the genus *Chamaemelum.*
- use of
   (a) an extract obtained from rosemary, and
   (b) an extract obtained from a plant of the genus *Matricaria* or of the genus *Chamaemelum,*
   for preventing and/or inhibiting oxidation of a material.

Other possible applications include cosmetics.

### FOODSTUFF

The composition, process and use of the present invention may prevent and/or inhibit oxidation in any material. However, in view of the problems associated with oxidation of foodstuffs and in view of the particular effectiveness of the present invention in foodstuffs, preferably the composition is a foodstuff or may be added to a foodstuff. It will be appreciated by one skilled in the art that when the present composition is a foodstuff the essential components of (a) an extract obtained from rosemary and (b) extract from a plant of the genus *Matricaria* or of the genus *Chamaemelum* must be present in the foodstuff. They may have been provided by one or more means. For example they may have been added in the form of a composition containing the extracts.

The components may have been added to the foodstuff sequentially.

In one aspect the composition of the present invention is an antioxidant composition suitable for addition to a foodstuff.

Many foodstuffs may be protected by the present invention. Typical foodstuffs are raw meat, cooked meat, raw poultry products, cooked poultry products, raw seafood products, cooked seafood products, ready to eat meals, pasta sauces, pasteurised soups, mayonnaise, salad dressings, oil-in-water emulsions, margarines, low fat spreads, water-in-oil emulsions, dairy products, cheese spreads, processed cheese, dairy desserts, flavoured milks, cream, fermented milk products, cheese, butter, condensed milk products, ice cream mixes, soya products, pasteurised liquid egg, bakery products, confectionery products, fruit products, and foods with fat-based or water-containing fillings. Preferably the foodstuff is mayonnaise.

In one aspect the present composition is dosed in a foodstuff in an amount to provide the extract obtained from rosemary in an amount of no greater than 5000ppm based on the weight of the foodstuff, such as no greater than 4000ppm, such as no greater than 3000ppm, such as no greater than 2000 ppm, such as no greater than 1000 ppm, such as no greater than 700 ppm, such as no greater than 500 ppm, such as no greater than 400 ppm, such as no greater than 300 ppm such as no greater than 200 ppm, such as no greater than 150 ppm, such as no greater than 100 ppm, such as no greater than 75 ppm, such as no greater than 50 ppm, such as no greater than 40 ppm, such as 1 to 150 ppm, such as 1 to 100 ppm, such as 1 to 50 ppm, such as 1 to 40 ppm, such as 10 to 150 ppm, such as 10 to 100 ppm, such as 10 to 50 ppm, such as 20 to 50 ppm based on the weight of the foodstuff.

In one aspect the present composition is dosed in a foodstuff in an amount to provide the extract obtained from a plant of the genus *Matricaria* or of the genus *Chamaemelum* in an amount of no greater than 5000ppm based on the weight of the foodstuff, such as no greater than 4000ppm, such as no greater than 3000ppm, such as no greater than 2000 ppm, such as no greater than 1000 ppm, such as no greater than 700 ppm, such as no greater than 500 ppm, such as no greater than 400 ppm, such as no greater than 300 ppm based on the weight of the foodstuff, such as no greater than 200 ppm, such as no greater than 150 ppm, such as no greater than 100 ppm, such as no greater than 75 ppm, such as no greater than 50 ppm, such as no greater than 40 ppm, such as 1 to 150 ppm, such as 1 to 100 ppm, such as 1 to 50 ppm, such as 1 to 40 ppm, such as 10 to 150 ppm, such as 10 to 100 ppm, such as 10 to 50 ppm, such as 20 to 50 ppm based on the weight of the foodstuff.

In one aspect the present composition is dosed in a foodstuff in an amount to provide active anti-oxidant ingredient obtained from rosemary in an amount of no greater than 1000ppm based on the weight of the foodstuff, such as no greater than 700 ppm, such as no greater than 500 ppm, such as no greater than 400 ppm, such as no greater than 200 ppm based on the weight of the foodstuff, such as no greater than 150 ppm, such as no greater than 100 ppm, such as no greater than 75 ppm, such as no greater than 50 ppm, such as no greater than 40 ppm, such as 1 to 100 ppm, such as 1 to 75 ppm, such as 1 to 50 ppm, such as 1 to 40 ppm, such as 10 to 100 ppm, such as 10 to 75 ppm, such as 10 to 50 ppm, such as 20 to 50 ppm based on the weight of the foodstuff.

In one aspect the present composition is dosed in a foodstuff in an amount to provide active anti-oxidant ingredient obtained from a plant of the genus *Matricaria* or of the genus *Chamaemelum* in an amount of no greater than 5000ppm such as no greater than 4000ppm, such as no greater than 3000ppm, such as no greater than 2000ppm such as no greater than 1000ppm" such as no greater than 700 ppm, such as no greater than 500 ppm, such as no greater than 400 ppm, such as no greater than 200 ppm, such as no greater than 100 ppm, such as no greater than 75ppm, such as no greater than 50 ppm, such as no greater than 40 ppm, such as no greater than 20 ppm based on the weight of the foodstuff, such as no greater than 15 ppm, such as no greater than 10 ppm, such as no greater than 7 ppm, such as no greater than 5 ppm, such as no greater than 4 ppm, such as 1 to 10 ppm, such as 1 to 7 ppm, such as 1 to 5 ppm, such as 2 to 5 ppm, such as 0.1 to 10 ppm, such as 0.1 to 7 ppm, such as 0.1 to 5 ppm.

In one aspect the present composition is dosed in a foodstuff in an amount to provide phenolic diterpene obtained from rosemary in an amount of no greater than 1000ppm based on the weight of the foodstuff, such as no greater than 700 ppm, such as no greater than 500 ppm, such as no greater than 400 ppm, such as no greater than 200 ppm based on the weight of the foodstuff, such as no greater than 150 ppm, such as no greater than 100 ppm, such as no greater than 75 ppm, such as no greater than 50 ppm, such as no greater than 40 ppm, such as 1 to 100 ppm, such as 1 to 75 ppm, such as 1 to 50 ppm, such as 1 to 40 ppm, such as 10 to 100 ppm, such as 10 to 75 ppm, such as 10 to 50 ppm, such as 20 to 50 ppm based on the weight of the foodstuff.

In one aspect the present composition is dosed in a foodstuff in an amount to provide flavone obtained from a plant of the genus *Matricaria* or of the genus *Chamaemelum* in an amount of no greater than 5000ppm such as no greater than 4000ppm, such as no greater than 3000ppm, such as no greater than 2000ppm such as no greater than 1000ppm, such as no greater than 700 ppm, such as no greater than 500 ppm, such as no greater than 400 ppm, such as no greater than 200 ppm, such as no greater than 100 ppm, such as no greater than 75ppm, such as no greater than 50 ppm, such as no greater than 40 ppm, such as no greater than 20 ppm based on the weight of the foodstuff, such as no greater than 15 ppm, such as no greater than 10 ppm, such as no greater than 7 ppm, such as no greater than 5 ppm, such as no greater than 4 ppm, such as 1 to 10 ppm, such as 1 to 7 ppm, such as 1 to 5 ppm, such as 2 to 5 ppm such as 0.1 to 10 ppm, such as 0.1 to 7 ppm, such as 0.1 to 5 ppm based on the weight of the foodstuff.

In one aspect the present composition is dosed in a foodstuff in an amount to provide carnosic acid in an amount of no greater than 500 ppm, such as no greater than 400 ppm, such as no greater than 200 ppm, such as no greater than 100 ppm, such as no greater than 75ppm, such as no greater than 50 ppm, such as no greater than 40 ppm, such as no greater than 200 ppm based on the weight of the foodstuff, such as no greater than 150 ppm, such as no greater than 100 ppm, such as no greater than 75 ppm, such as no greater than 50 ppm, such as no greater than 40 ppm, such as 1 to 100 ppm, such as 1 to 75 ppm, such as 1 to 50 ppm, such as 1 to 40 ppm, such as 10 to 100 ppm, such as 10 to 75 ppm, such as 10 to 50 ppm, such as 20 to 50 ppm based on the weight of the foodstuff.

In one aspect the present composition is dosed in a foodstuff in an amount to provide apigenin-7-O-glucoside in an amount of no greater than 2000ppm such as no greater than 1000ppm, such as no greater than 500 ppm, such as no greater than 400 ppm, such as no greater than 200 ppm, such as no greater than 100 ppm, such as no greater than 75ppm, such as no greater than 50 ppm, such as no greater than 40 ppm, such as no greater than 20 ppm based on the weight of the foodstuff, such as no greater than 15 ppm, such as no greater than 10 ppm, such as no greater than 7 ppm, such as no greater than 5 ppm, such as no greater than 4 ppm, such as 1 to 10 ppm, such as 1 to 7 ppm, such as 1 to 5 ppm, such as 2 to 5 ppm such as 0.01 to 10 ppm, such as 0.01 to 7 ppm, such as 0.01 to 5 ppm based on the weight of the foodstuff.

### ADDITIONAL COMPONENTS

The composition of the present invention or the composition for use in the present invention may contain one or more additional components. However, in some aspects the antioxidant composition of the present invention (suitable for addition to a foodstuff) contains no additional components or contains no additional components that materially affect the properties of the composition. In these aspects the present invention provides
- an anti-oxidant composition consisting essentially of (a) an extract obtained from rosemary, (b) an extract obtained from a plant of the genus *Matricaria* or of the genus *Chamaemelum.*
- a process for preventing and/or inhibiting oxidation of a foodstuff, the process comprising the step of contacting the foodstuff with a composition consisting essentially of (a) an extract obtained from rosemary, and (b) an extract obtained from a plant of the genus *Matricaria* or of the genus *Chamaemelum.*
- use of a composition consisting essentially of (a) an extract obtained from rosemary, and (b) an extract obtained from a plant of the genus *Matricaria* or of the genus *Chamaemelum,* for preventing and/or inhibiting oxidation of a foodstuff.
- a kit for preparing a composition as defined herein, the kit consisting essentially of (a) an extract obtained from rosemary, and (b) an extract obtained from a plant of the genus *Matricaria* or of the genus *Chamaemelum,* in separate packages or containers; optionally with instructions for admixture and/or contacting and/or use.

In one preferred aspect the composition further comprises (c) an extract obtained from a plant of the *Cynara* family. In one preferred aspect the composition further comprises (c) an extract obtained from a plant of the *Cynara* family. Preferably the plant of the *Cynara* family is selected from an artichoke. Preferably the plant of the *Cynara* family is selected from *Cynara scolymus* and *Cynara cardunculus.* Preferably the plant of the *Cynara* family is *Cynara scolymus.*

In one preferred aspect the composition further comprises a carrier. Preferably the carrier is selected from propylene glycol, maltodextrin, sugar, salt, ethanol, water, protein, glycerol, medium chain triglyceride (MCT oil), and vegetable oil.

In one preferred aspect the composition further comprises an emulsifier. Preferably the emulsifier is selected from polyoxyethylene sorbitan esters (polysorbates), polyoxyethylene stearate, mono- and diglycerides of fatty acids, mono- and diglycerides esters further esterified with a dibasic organic acid selected from acetic acid, lactic acid, citric acid and mono- and diacetyl tartaric acid or mixtures thereof, lecithin, polyglycerol esters of fatty acids, polyglycerol polyricinoleate, sucrose esters of fatty acids, sucroglycerides, propylene glycol esters of fatty acids, sorbitan esters of fatty acids, sodium and calcium salt of stearoyl-2-lactylate, sodium, potassium, calcium and magnesium salts of fatty acids and ammonium phosphatides.

### PROCESS

As discussed herein in one aspect the present invention provides a process for preventing and/or inhibiting oxidation of a foodstuff, the process comprising the step of contacting the foodstuff with a composition comprising (a) an extract obtained from rosemary, and (b) an extract obtained from a plant of the genus *Matricaria* or of the genus *Chamaemelum.*

In one aspect the extract obtained from rosemary, and the extract obtained from a plant of the genus *Matricaria* or of the genus *Chamaemelum* are added to the foodstuff together.

In one aspect the extract obtained from rosemary, and the extract obtained from a plant of the genus *Matricaria* or of the genus *Chamaemelum* are added to the foodstuff sequentially.

Thus the present invention provides in one aspect an antioxidant composition which may be added to a range of materials such as food systems and in another aspect a combination of two separate products which may added sequentially to materials such as food products.

The present invention will now be described in further detail by way of example only with reference to the accompanying figures in which:-
Figure 1 shows a graph; and
Figure 2 shows a graph.

The present invention will now be described in further detail in the following examples.

### EXAMPLES

Two individual mayonnaise trials were conducted in respect of the synergistic interaction between chamomile extract (CE) and a phenolic diterpene based rosemary extract (RE). Determination of secondary oxidation products by gas chromatography-mass-spectroscopy with selecting ion monitoring (GC-MS-SIM) revealed a synergistic interaction between the CE and RE. As single ingredient, CE was ineffective, but in combination with RE a strong synergism appeared in delaying the development of key secondary oxidation products (2,4-heptadienal and 2,4-decadienal).

### Plant Extracts Used

**Rosemary Ex.** was a hydroalcoholic extract from *Rosmarinus officinalis* L. containing min. 70wt% phenolic diterpenes (which includes carnosic acid) and containing 70 wt% carnosic acid. Article no. E070143-70 available from Danisco Airs, Denmark.

**Chamomile Extract** was a hydroalcoholic extract from *Matricaria recurita* containing 4.6% flavones (which includes apigenin-7-*O*-glucoside, apigenin-7-*O*-(6"-malonyl-glucoside) and apigenin-7-*O*-(4"-acetyl-6"-malonyl-glucoside)) and containing apigenin-7-*O*-glucoside, apigenin-7-*O*-(6"-malonyl-glucoside) and apigenin-7-*O*-(4"-acetyl-6"-malonyl-glucoside) is a combined total of 4.Owt%. Article no. E070143-93 available from Danisco A/S, Denmark.

### Experimental procedure

### Mayonnaise Trial I

The mayonnaises were produced using the recipe in table 1 and procedures outlined below. All ingredients in mayonnaise were of food-grade quality. Samplings were done within 26 days according to the schematised sampling plan in table 2.

**Table 1: Mayonnaise recipes. Gram of ingredients used to produce 8 kg batches**

| Ingredient | Mayonnaise without antioxidants (CTR) | Mayonnaise added 40ppm Chamomile Extract (CE) | Mayonnaise added 40ppm Rosemary Extract (RE) | Mayonnaise added 40ppm chamomile ex. and 40 ppm Rosemary Ex. (CE+RE) |
|---|---|---|---|---|
| Water | 800,00 | 799,68 | 799,68 | 799,36 |
| Canola Oil | 6400,00 | 6400,00 | 6400,00 | 6400,00 |
| Sodium Chloride | 56,00 | 56,00 | 56,00 | 56,00 |
| Sugar | 80,00 | 80,00 | 80,00 | 80,00 |
| Potassium Sorbate | 8,00 | 8,00 | 8,00 | 8,00 |
| Grindsted® FF5105 | 8,00 | 8,00 | 8,00 | 8,00 |
| Egg Yolk | 360,00 | 360,00 | 360,00 | 360,00 |
| Vinegar 10% | 240,00 | 240,00 | 240,00 | 240,00 |
| Mustard | 40,00 | 40,00 | 40,00 | 40,00 |
| Chamomile Extract | | 0,32 | | 0,32 |
| Rosemary Extract | | | 0,32 | 0,32 |
| Water | 6,00 | 6,00 | 6,00 | 6,00 |
| Ethanol (96%) | 2,00 | 2,00 | 2,00 | 2,00 |
| Total | 8000,00 | 8000,00 | 8000,00 | 8000,00 |

1. Dissolve sodium chloride, sugar and potassium sorbate in ¾ parts of the water in the funnel of a FrymaKoruma Disho A15 mixer (Romaco FrymaKoruma, Germany), while mixing at 3000 rpm and stirring at 60 rpm in a vacuum of 500 mbar for 1 minute.
2. Dissolve extracts in mixture of 6g water and 2g ethanol and add the mixture to the water phase.
3. Make a slurry of GRINDSTED® FF 5105 and approx. 30g canola oil, and pump the slurry into the water phase at 3000 rpm in a vacuum (500mbars) and continue mixing for 1 minute.
4. Add egg yolk and the rest of the water, while mixing at 3000 rpm and stirring at 60 rpm in a vacuum of 500 mbars and continue mixing for 3 minutes.
5. Emulsify the rest of the canola oil at 3500rpm and continue mixing for 2 minutes.
6. Add vinegar and mustard while mixing at 3500 rpm and stirring at 60 rpm in a vacuum of 300 mbars for 1 minute.
7. Finally, mixing speed was decreased to 2500 rpm and stirring at 60 rpm in a vacuum of 300 mbar and held for 30 seconds before each batch was filled (temperature 25°C) into food-approved DUMA PEHD plastic containers (150ml) with 120g ± 10g (allowing headspace of approx. 10-20%).

**Table 2: Sampling plan**

| Days of storage | 0 | 7 | 14 | 21 | 26 |
|---|---|---|---|---|---|
| Peroxide value (oil) | X | | | | |
| ISC-OES metal analysis | X | | | | |
| GC-MS-SIM analysis* | X | X | X | X | X |
| Sensory evaluation | X | X | X | X | X |
| Surface colour (Lab-value) | X | | | | X |

| | | | | | |
|---|---|---|---|---|---|
| *) Samples were stored at -20°C for approx. 1 month before the methanol extraction of volatiles and the GC-MS-SIM analysis. | | | | | |

### Mayonnaise Trial II

The mayonnaises were produced using the recipe in table 3 and procedures outlined below. Samplings were done after 1 and 14 days of storage at 20°C in the dark according to the sampling plan in table 4.

**Table 3: Mayonnaise recipes. Gram of ingredients used to produce 8 kg batches**

| Ingredient | Mayonnaise without antioxidants (CTR_A) | Mayonnaise added 60ppm Chamomile Extract (CE) | Mayonnaise added 40ppm Rosemary Extract (RE) | Mayonnaise added 60ppm chamomile ex. and 40 ppm Rosemary Ex. (CE+RE) | Mayonnaise without antioxidants (CTR_B) |
|---|---|---|---|---|---|
| Water | 800,00 | 799,52 | 799,68 | 799,20 | 800,00 |
| Canola Oil | 6400,00 | 6400,00 | 6400,00 | 6400,00 | 6400,00 |
| Sodium Chloride | 56,00 | 56,00 | 56,00 | 56,00 | 56,00 |
| Sugar | 80,00 | 80,00 | 80,00 | 80,00 | 80,00 |
| Potassium Sorbate | 8,00 | 8,00 | 8,00 | 8,00 | 8,00 |
| Grindsted® FF5105 | 8,00 | 8,00 | 8,00 | 8,00 | 8,00 |
| Egg Yolk | 360,00 | 360,00 | 360,00 | 360,00 | 360,00 |
| Vinegar 10% | 240,00 | 240,00 | 240,00 | 240,00 | 240,00 |
| Mustard | 40,00 | 40,00 | 40,00 | 40,00 | 40,00 |
| Rosemary Extract | | | 0,32 | 0,32 | |
| Chamomile Extract | | 0,48 | | 0,48 | |
| Water | 6,00 | 6,00 | 6,00 | 6,00 | 6,00 |
| Ethanol | 2,00 | 2,00 | 2,00 | 2,00 | 2,00 |
| Total | 8000,00 | 8000,00 | 8000,00 | 8000,00 | 8000,00 |

1. Dissolve sodium chloride, sugar and potassium sorbate in ¾ parts of the water in the funnel of a FrymaKoruma Disho A15 mixer (Romaco FrymaKoruma, Germany), while mixing at 3000 rpm and stirring at 60 rpm in a vacuum of 500 mbar for 1 minute.
2. Dissolve extracts in mixture of 6g water and 2g ethanol and add the mixture to the water phase.
3. Make a slurry of GRINDSTED® FF 5105 and approx. 30g canola oil, and pump the slurry into the water phase at 3000 rpm in a vacuum (500mbars) and continue mixing for 1 minute.
4. Add egg yolk and the rest of the water, while mixing at 3000 rpm and stirring at 60 rpm in a vacuum of 500 mbars and continue mixing for 3 minutes.
5. Emulsify the rest of the canola oil at 3500rpm and continue mixing for 2 minutes.
6. Add vinegar and mustard while mixing at 3500 rpm and stirring at 60 rpm in a vacuum of 300 mbars for 1 minute.
7. Finally, mixing speed was decreased to 2500 rpm and stirring at 60 rpm in a vacuum of 300 mbar and held for 30 seconds before each batch was filled (temperature 25°C) into food-approved DUMA PEHD plastic containers (150ml) with 120g ± 10g (allowing headspace of approx. 10-20%).

**Table 4: Sampling plan**

| Days of storage | 1 | 14 |
|---|---|---|
| Peroxide value (oil) | X | |
| ISC-OES metal analysis | X | |
| GC-MS-SIM-analysis^{*} | X | X |

| | | |
|---|---|---|
| *) Samples were stored at -20°C for approx. 4 months before the methanol extraction of volatiles and the GC-MS-SIM analysis. | | |

### Methods

### Determination of phenolic diterpenes in rosemary extract

The antioxidant activity of rosemary extract is primarily related to the content of phenolic diterpenes. The content was analysed in duplicates using method based on high pressure liquid chromatography (HPLC), according to Thorsen & Hildebrandt (2003).

### Determination of peroxide value of canola oil

The peroxide value of canola oil was determined in duplicates by potentiometric titration according to: The American Oil Chemists' Society: Official Methods and Recommended Practices of The AOCS, 5^{th} Edition, Method: Cd 8-53.

### Determination of metals in mayonnaises by Inductively Coupled Plasma-Optical Emission Spectroscopy (ICP-OES)

The content of Cu, Fe, Ni and Zn was measured in triplicates by Inductively Coupled Plasma-Optical Emission Spectroscopy (ICP-OES) using a Varian Vista MPX (Varian, Palo Alto, CA). The analysis of elements was done according to the Official Methods of Analysis of the AOAC International, 16^{th} Edition, Methods: 965.09, 977,29, 985,01, 984,27.

### Sensory evaluation of mayonnaises

The number of days before rancid off-taste was first noticed until the product was unacceptable was evaluated by a panel of 2 people. Additional observations, e.g. extract notes, acidity, colour issues were further judged.

### Determination of oxidation products in mayonnaises by gas chromatography-mass spectrometry with selected ion monitoring (GC-MS-SIM) analysis.

2,4-heptadienal and 2,4-decadienal were determined in triplicates by gas chromatography-mass spectrometry with selected ion monitoring (GC-MS-SIM) analysis using an Agilent 6890N GC/Agilent 5973N MSD system.

To 0,5g (+/- 0.1g) of mayonnaise were added 10ml methanol and internal standard (hexyl hexanoate) corresponding to 10 mg/kg. Then the slurry was shaken for 15min on a shaker at 1000 rpm and placed in freezer overnight. An aliquot of the supernatant methanol phase was subsequently transferred to a GC-injection vial.

A calibration was performed in the range 0-40 mg/kg by adding a stock solution of 2,4-T,C-heptadienal and 2,4-T,C-decadienal and internal standard directly to methanol.

In the calculations, the response from the 2,4-T,T isomers was added to the response from the 2,4-T,C-isomers, and a total was reported.

### Results

### Determination of phenolic diterpene content in rosemary extract

The content of carnosol, carnosic acid and 12-0-methyl-carnosic acid were analysed in the rosemary extract by HPLC and results (g/100g) are schematized in table 5. Carnosic acid was the major component of the phenolic diterpenes in the rosemary extract.

**Table 5: Active components in Rosemary Extract**

| Product | E-number | Carnosol wt.% | Carnosic acid wt.% | 12-O-Methyl Carnosic Acid wt.% | Total wt.% |
|---|---|---|---|---|---|
| Rosemary Extract | E070143-70 | 4,6 | 70,1 | 10,1 | 84,8 |

### Peroxide value of canola oil

The Canola Oil (COLZAO™ Canola oil, Aarhus Karlsham, Denmark) used in the two trials were kept refrigerated in 190kg sealed drums until the production of the mayonnaise. A sample of the oil was analysed immediately after opening the container and before the production of the mayonnaises. Results were calculated as meq / kg oil as presented in table 6.

**Table 6: Peroxide values of the Canola Oil used in mayonnaise trial I & II.**

| Trial no. | Lot. no. / production date | Analytical result (meq / kg oil) |
|---|---|---|
| I | 1000147444 / 20.03.2009 | 0,7 |
| II | 1000150000 / 31.03.2009 | 0,9 |

### Determination of metals in mayonnaises by Inductively Coupled Plasma-Optical Emission Spectroscopy (ICP-OES)

The unprotected control batch was analysed in triplicates for the content of Cu, Fe, Ni and Zn by Inductively Coupled Plasma-Optical Emission Spectroscopy (ICP-OES). Table 7 shows the average values of metals in mg/kg product. The copper content was approx. 7 times higher in mayonnaises produced in trial II than in trial I. The raw material responsible for the high copper variation monitored in trial I & II was not identified.

**Table 7: Triplicate determination of Cu, Fe, Ni and Zn in ppm (mg/kg mayonnaise) based on ICP-OES.**

| Trial no. | Sample ID | ppm Cu | ppm Fe | ppm Ni | ppm Zn |
|---|---|---|---|---|---|
| I | CTR | 0,1 | 2 | <0,1 | 1,4 |
| II | CTR_A | 0,7 | 2,2 | 0,1 | 1,3 |

### Oxidative stability, mayonnaise trial I

### Determination of oxidation products by gas chromatoqraphy-mass spectrometry with selected ion monitoring (GC-MS-SIM) analysts.

Oxidation of polyunsaturated fatty acid (PUFA) oils produces a complex mixture of volatile secondary oxidation products, which cause particularly objectionable off-flavours. 2,4-heptadienal and 2,4-decadienal have previously been identified as one of the important markers for oxidation in emulsions, such as mayonnaise and milk emulsions (Hartvigsen *et al.* 2000; Let *et al.,* 2004).

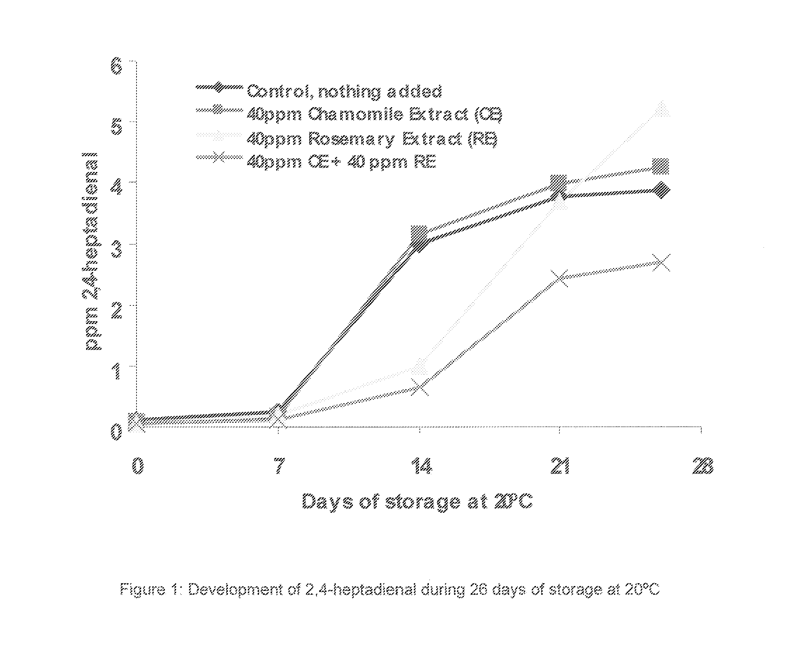

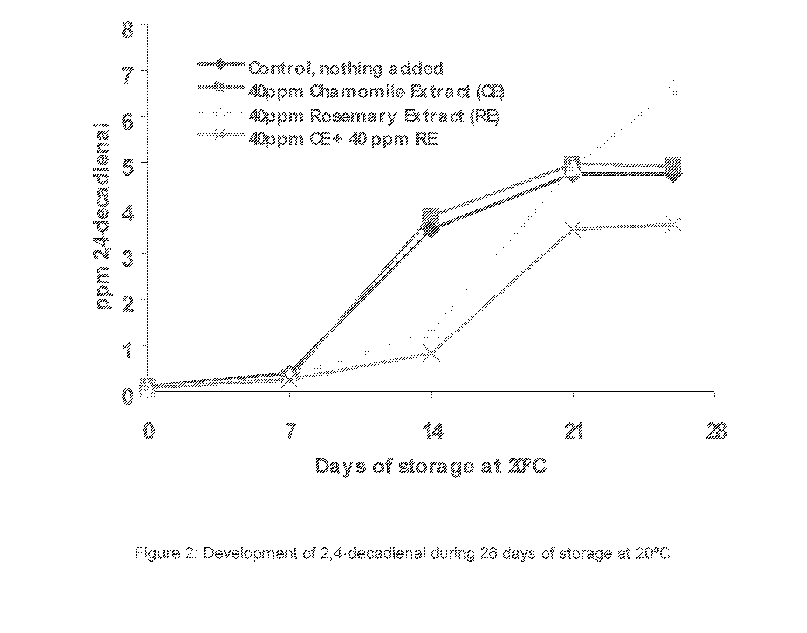

Average values (mg/kg mayonnaise) of 2,4-heptadienal and 2,4-decadienal determined in duplicates by GC-MS-SIM are presented in Table 8 and 9 and graphically viewed in Figure 1 & 2.

**Table 8: Duplicate determination of 2,4-heptadienal (mg/kg mayonnaise) during 26 days of storage at 20°C. One-way analysis of variance (ANOVA) at each day and Tukey's test. Batches followed by same letter not significant different using 0.05 levels of significance.**

| Days of storage | ppm 2,4-heptadienal | | | |
|---|---|---|---|---|
| | Control, nothing added (CTR) | 40ppm Chamomile Extract (CE) | 40ppm Rosemary Extract (RE) | 40ppm CE + 40 ppm RE (CE+RE) |
| 0 | 0,11^{b} ± 0,01 | 0,08^{ab} ± 0,02 | 0,07^{a} ± 0,01 | 0,06^{a} ± 0,01 |
| 7 | 0,26^{c} ± 0,02 | 0,17^{ab} ± 0,01 | 0,19^{b} ± 0,05 | 0,12^{a} ± 0,02 |
| 14 | 2,98^{c} ± 0,13 | 3,15^{c} ± 0,23 | 0,99^{b} ± 0,06 | 0,66^{a} ± 0,04 |
| 21 | 3,76^{b} ± 0,21 | 3,99^{b} ± 0,90 | 3,67^{b} ± 0,14 | 2,43^{a} ± 0,18 |
| 26 | 3,88^{ab} ± 0,64 | 4,26^{b} ± 0,93 | 5,23^{b} ± 0,85 | 2,70^{a} ± 0,15 |

**Table 9: Duplicate determination of 2,4-decadienal (mg/kg mayonnaise) during 26 days of storage at 20°C. One-way analysis of variance (ANOVA) at each day and Tukey's test. Batches followed by same letter not significant different using 0.05 levels of significance.**

| Days of storage | ppm 2,4-decadienal | | | |
|---|---|---|---|---|
| | Control, nothing added (CTR) | 40ppm Chamomile Extract (CE) | 40ppm Rosemary Extract (RE) | 40ppm CE + 40 ppm RE (CE+RE) |
| 0 | 0,12^{c} ± 0,02 | 0,10^{bc} ± 0,02 | 0,07^{ab} ± 0,02 | 0,05^{a} ± 0,01 |
| 7 | 0,41^{b} ± 0,04 | 0,30^{a} ± 0,02 | 0,33^{ab} ± 0,06 | 0,26^{a} ± 0,03 |
| 14 | 3,55^{c} ± 0, 8 | 3,84^{c} ± 0,29 | 1,28^{b} ± 0,05 | 0,82^{a} ± 0,04 |
| 21 | 4,74^{a} ± 0,30 | 4,96^{a} ± 1,40 | 4,90^{a} ± 0,23 | 3,53^{a} ± 0,35 |
| 26 | 4,76^{ab} ± 1,07 | 4,93^{ab} ± 1,67 | 6,62^{b} ± 1,35 | 3,63^{a} ± 0,22 |

A one-way analysis of variance (ANOVA) using Tukey's test with 0.05 levels of significance was used to compare treatments at each storage day. The overall strongest antioxidant activity was demonstrated for the combined treatment with 40ppm CE + 40 ppm RE. The treatment with RE alone was significant within the first 14 days of storage, where after a prooxidant activity of RE were indicated, but not statistically proven.

2-factor interactions were further studied using 50-50 multivariate analysis of variance (50-50 Manova) described by Langsrud (2000, 2002). The dataset consisted of standardised (1/stdev) responses of 2,4-heptadienal and 2,4-decadienal for the 4 treatments (CTR, CE, RE, CE+RE) at all sampling days (0, 7, 14, 21 & 26 days). The analysis confirmed a 2-factor interaction between CE and RE on the inhibition of 2,4-heptadienal (_{PRE*CE}<0,001) and 2,4-decadienal (_{PRE*CE}<0,01). The fact that, chamomile extract interacted synergistically with rosemary extract has not earlier been described in literature.

### Sensory evaluation

The products were evaluated by a panel of 2 people, rather than a full-scale panel. This small panel was able to identify any obvious 'off tastes'. The sensory evaluation confirmed the strong antioxidant activity of the combined mixture of rosemary extract and chamomile (RE+CE). Of further note was the fact, that no off-flavour or discolouration was detected in any of the antioxidant treated batches.

**Table 10: Sensory evaluation of rancidity, extract notes and colour in mayonnaises stored at 20°C for 26 days.**

| Treatment | Oxidation in mayonnaise stored at 20°C. Days until rancid off-taste was: first noticed (...) & product was unacceptable | Other observations, colour issues, extract notes etc. |
|---|---|---|
| Control, nothing added | (14) 14 | Not detected |
| 40ppm Chamomile Extract (CE) | (21) 26 | Not detected |
| 40ppm Rosemary Extract (RE) | (21) 26 | Not detected |
| 40ppm CE + 40 ppm RE | (26) more than 26 | Not detected |

### Determination of surface Lab-colour by tri-stimulus colorimeter

The surface Lab-colour was determined in duplicates after 0 and 26 days of storage using a Minolta Colormeter and the results are presented in Table 11.

A two-way analysis of variance (ANOVA) revealed no treatment (p>0.05) or days effects (p>0.05), which corresponds with the aforementioned sensory observation.

**Table 11: Duplicate determination of the surface Lab-colour.**

| Days of storage | Lab-value | Control, nothing added (CTR) | 40ppm Chamomile Extract (CE) | 40ppm Rosemary Extract (RE) | 40ppm CE + 40 ppm RE (CE+RE) |
|---|---|---|---|---|---|
| 0 | *L-value* | 83,9±0,2 | 84,5±1,5 | 83,5±1,0 | 84,4±0,0 |
| 26 | *L-value* | 83,0±0,6 | 83,7±0,4 | 82,6±1,3 | 84,3±1,4 |
| 0 | *a-value* | -2,1±0,0 | -2,0±0,0 | -2,1±0,1 | -2,1±0,1 |
| 26 | *a-value* | -2,0±0,0 | -1,9±0,1 | -1,8±0, 3 | -2,0±0,0 |
| 0 | *b-value* | 13,9±0,0 | 13,9±0,2 | 13,4±1,2 | 14,0±0,1 |
| 26 | *b-value* | 14,4±0,1 | 14,2±0,3 | 14,8±0,2 | 14,8±0,0 |

### Oxidative stability, mayonnaise trial II

In a complex matrix like a food emulsion system several factors may influence the initiation and progress of lipid autoxidation. The use of gently processing conditions during the emulsification of the emulsion, depletion of oxygen and metals as well as the use of an oil of a good initial quality are some of the most important factors, which can influence the oxidative deterioration. The oil used in both trials had a satisfying quality with comparable peroxide values of 0.7meq/kg and 0.9meq/kg, respectively. The copper content in finished products, however, ranged from 0,1 ppm in trial I to 0,7ppm in trial II. The higher copper content match the monitored faster development of both 2,4-heptadienal and 2,4-decadienal in trial II than compared to the ones produced in trial I (compare tables 8 & 9 with tables 12 & 13).

### Determination of oxidation products by gas chromatography-mass spectrometry with selected ion monitoring (GC-MS-SIM) analysis.

A one-way analysis of variance (ANOVA) using Tukey's test with 0.05 levels of significance was used to compare treatments at day 1 and day 14. As it was the case in trial I, the combined treatment (CE+RE) was found significant more effective than treatment with RE alone. The treatment with CE alone, was prooxidant after 14 days in comparison to CTR_B, but not in comparison to CTR_A.

**Table 12: Duplicate determination of 2,4-heptadienal (mg/kg mayonnaise) after 1 and 14 days of storage at 20°C. One-way analysis of variance (ANOVA) at each day and Tukey's test. Batches followed by same letter not significant different using 0.05 levels of significance.**

| ID | Treatment | 2,4-heptadienal Storage: 1 days | 2,4-heptadienal Storage: 14 days |
|---|---|---|---|
| CTR_A | Control, nothing added | 0,43 ^{b} ± 0,07 | 14,59 ^{cd} ± 1,38 |
| CTR_B | Control, nothing added | 0,26 ^{a} ± 0,02 | 14,12 ^{c} ± 0,79 |
| CE | 60ppm Chamomile Extract (CE) | 0,28 ^{a} ± 0,01 | 16,18 ^{d} ± 0,48 |
| RE | 40ppm Rosemary Extract (RE) | 0,30 ^{a} ± 0,02 | 9,44 ^{b} ± 0,15 |
| RE+CE | 60ppm CE + 40ppm RE | 0,22 ^{a} ± 0,02 | 4,78 ^{a} ± 0,59 |

**Table 13: Duplicate determination of 2,4-decadienal (mg/kg mayonnaise) after 1 and 14 days of storage at 20°C. One-way analysis of variance (ANOVA) at each day and Tukey's test. Batches followed by same letter not significant different using 0.05 levels of significance.**

| ID | Treatment | 2,4-decadienal Storage: 1 days | 2,4-decadienal Storage: 14 days |
|---|---|---|---|
| CTR_A | Control, nothing added | 0,62 ^{b} ± 0,09 | 18,16^{cd} ± 1,70 |
| CTR_B | Control, nothing added | 0,32 ^{a} ± 0,02 | 16,14 ^{c} ± 0,74 |
| CE | 60ppm Chamomile Extract (CE) | 0,28 ^{a} ± 0,01 | 19,48 ^{d} ± 1,04 |
| RE | 40ppm Rosemary Extract (RE) | 0,35 ^{a} ± 0,01 | 11,22 ^{b} ± 0,63 |
| RE+CE | 60ppm CE + 40ppm RE | 0,28 ^{a} ± 0,02 | 5,52 ^{a} ± 0,31 |

The 2-factor interactions were again studied using 50-50 multivariate analysis of variance (50-50 Manova) described by Langsrud (2000, 2002). The analysis confirmed a strong 2-factor interaction between CE and RE on the inhibition of 2,4-heptadienal (p_{RE*CE}<0,001) and on the inhibition of 2,4-decadienal (_{PRE*CE}<0,001).

### Example of a blend composition

Table 14 shows an example of a liquid blend composition of chamomile and rosemary extract dissolved in propylene glycol.

**Table 14: Blend composition**

| Ingredients | g/kg | % |
|---|---|---|
| Chamomile Extract | 82.50 | 8.25 |
| Rosemary Extract | 55.00 | 5.50 |
| Propylene glycol | 862.50 | 86.25 |
| Total | 1000,00 | 100.00 |

The blend is used in mayonnaise in amounts of 50-2000 ppm based on the amount of mayonnaise.

### Conclusion

We have shown synergistic activity in respect of antioxidant activity when combining chamomile extract (CE) and rosemary extract (RE) to create an efficient multi-component antioxidant blend capable of prolonging the shelf-life of mayonnaise better than rosemary extract alone.

Two individual mayonnaise trials were conducted to demonstrate synergistic interaction of combining CE and RE. Determination of secondary oxidation products by gas chromatography-mass-spectroscopy with selecting ion monitoring (GC-MS-SIM) revealed a synergistic interaction between the CE and RE. As single ingredient, CE was ineffective, but in combination with RE a strong synergism appeared in delaying the development of 2,4-heptadienal and 2,4-decadienal.

### REFERENCES

Langsrud, ∅. (2002). 50-50 multivariate analysis of variance for collinear responses. The Statistician 51(3), pp. 305-317
Langsrud ∅. (2000), Fifty-Fifty MANOVA: Multivariate Analysis of Variance for Collinear Responses, Proceedings of The Industrial Statistics in Action 2000, vol. 2, pp. 250-264
Let, M. B., Jacobsen, C. & Meyer, A.S. (2004). Effects of fish oil type lipid antioxidants and presence of rapeseed oil on oxidative flavour stability of fish oil enriched milk. European Journal of Lipid Science and Technology, 106, pp. 170-182
Hartvigsen, K., Lund, P., Hansen, L.F. & Høller, G. (2000). Dynamic headspace of volatiles produced in fish oil enriched mayonnaise during storage. Journal of Agricultural and Food Chemistry, 48, pp. 4858-4867
Thorsen, M. A., & Hildebrandt, K. S. (2003). Quantitative determination of phenolic diterpenes in rosemary extracts: Aspects of accurate quantification. Journal of Chromatography A, 995, pp.119-125.
Nychas, G.-J.. E., Skandamis, P.. N.. 2003.. Antimicrobials from herbs and spices.. In: Natural Antimicrobials for the Minimal Processing of Foods.. Ed: S.. Roller.. CRC Press.. Washington, USA.
Smid, E.. J.. and Gorris, L.. G.. M.. 1999.. Natural antimicrobials for food preservation.. In: Handbook of Food Preservation.. Ed: M.. S.. Rahman.. Marcel Dekker Inc.. New York.
Loliger, J.. 1989.. Natural Antioxidants.. In: Rancidity in Food, edited by J.. Allen and R.. Hamilton.. Elsevier Applied Science, New York, pp 105-124
Cuvelier, M.. 0E., Richard, H., and Berset, C.. 1996.. Antioxidative activity and phenolic composition of pilot-plant and commercial extracts of sage and rosemary.. JAOCS 73: 645-652
US6231896
Wenkert et al. J. Org. Chem 30:2931, 1965)

Various modifications and variations of the described methods and system of the invention will be apparent to those skilled in the art without departing from the scope of the invention. Although the invention has been described in connection with specific preferred embodiments, it should be understood that the invention as claimed should not be unduly limited to such specific embodiments. Indeed, various modifications of the described modes for carrying out the invention which are obvious to those skilled in chemistry, biology, food science or related fields are intended to be within the scope of the following claims

## Claims

1. An anti-oxidant composition comprising
(a) an extract obtained from a plant, wherein the plant is rosemary,
(b) an extract obtained from a plant of the genus *Matricaria* or of the genus *Chamaemelum.*

2. A composition according to claim 1 wherein extract (b) is from a plant of the genus *Matricaria.*

3. A composition according to claim 1 or 2 wherein extract (b) is from a plant of the species *Matricaria recurtita.*

4. A composition according to claim 1, 2 or 3 further comprising
(c) an extract obtained from a plant of the *Cynara* family

5. A composition according to claim 4 wherein the plant of the *Cynara* family is *Cynara scolymus.*

6. A composition according to any one of the preceding claims wherein the extract obtained from rosemary contains phenolic diterpenes in an amount of at least 1wt% based on the weight of extract obtained from the rosemary.

7. A composition according to any one of the preceding claims wherein the extract obtained from rosemary contains carnosic acid in an amount of at least 1wt% based on the weight of extract obtained from the rosemary.

8. A composition according to any one of the preceding claims wherein the extract obtained from the plant of the genus *Matricaria* or of the genus *Chamaemelum* contains apigenin-7-O-glucoside in an amount of at least 0.1wt% based on the weight of extract obtained from the plant of the genus *Matricaria* or of the genus *Chamaemelum.*

9. A composition according to any one of the preceding claims wherein ratio of
(a) extract obtained from rosemary
to
(b) extract obtained from a plant of the genus *Matricaria* or of the genus *Chamaemelum* is from 30:1 to 1:20.

10. A foodstuff comprising an anti-oxidant composition according to any one of the preceding claims.

11. A foodstuff according to claim 10 wherein the foodstuff is selected from mayonnaise, salad dressings, oil-in-water emulsions, margarines, low fat spreads, water-in-oil emulsions, dairy products, cheese spreads, processed cheese, dairy desserts, flavoured milks, cream, fermented milk products, cheese, butter, condensed milk products, ice cream mixes, soya products, pasteurised liquid egg, bakery products, confectionery products, fruit products, foods with fat-based or water-containing fillings, raw meat, cooked meat, raw poultry products, cooked poultry products, raw seafood products, cooked seafood products, ready to eat meals, pasta sauces and pasteurised soups.

12. A foodstuff according to claim 10 wherein the foodstuff is mayonnaise.

13. A process for preventing and/or inhibiting oxidation of a foodstuff, the process comprising the step of contacting the foodstuff with
(a) an extract obtained from a plant wherein the plant is rosemary, and
(b) an extract obtained from a plant of the genus *Matricaria* or of the genus *Chamaemelum.*

14. Use of
(a) an extract obtained from a plant wherein the plant is rosemary, and
(b) an extract obtained from a plant of the genus *Matricaria* or of the genus *Chamaemelum,*
for preventing and/or inhibiting oxidation of a foodstuff.

15. A kit for preparing a composition as defined in any one of claims 1 to 9, the kit comprising
(a) an extract obtained from a plant wherein the plant is rosemary, and
(b) an extract obtained from a plant of the genus *Matricaria* or of the genus *Chamaemelum,*
in separate packages or containers; with instructions for admixture and/or contacting and/or use.

## Patentansprüche

1. Antioxidationsmittelzusammensetzung, die Folgendes umfasst:
(a) einen von einer Pflanze erhaltenen Extrakt, wobei es sich bei der Pflanze um Rosmarin handelt,
(b) einen von einer Pflanze der Gattung *Matricaria* oder der Gattung *Chamaemelum* erhaltenen Extrakt.

2. Zusammensetzung nach Anspruch 1, wobei der Extrakt (b) von einer Pflanze der Gattung *Matricaria* stammt.

3. Zusammensetzung nach Anspruch 1 oder 2, wobei der Extrakt (b) von einer Pflanze der Art *Matricaria recurtita* stammt.

4. Zusammensetzung nach Anspruch 1, 2 oder 3, die weiterhin
(c) einen von einer Pflanze der Familie *Cynara* erhaltenen Extrakt umfasst.

5. Zusammensetzung nach Anspruch 4, wobei es sich bei der Pflanze der Familie *Cynara* um *Cynara scolymus* handelt.

6. Zusammensetzung nach einem der vorhergehenden Ansprüche, wobei der von Rosmarin erhaltene Extrakt phenolische Diterpene in einer Menge von mindestens 1 Gew.-% in Bezug auf das Gewicht des aus dem Rosmarin erhaltenen Extrakts enthält.

7. Zusammensetzung nach einem der vorhergehenden Ansprüche, wobei der von Rosmarin erhaltene Extrakt Karnosinsäure in einer Menge von mindestens 1 Gew.-% in Bezug auf das Gewicht des aus dem Rosmarin erhaltenen Extrakts enthält.

8. Zusammensetzung nach einem der vorhergehenden Ansprüche, wobei der von der Pflanze der Gattung *Matricaria* oder der Gattung *Chamaemelum* erhaltene Extrakt Apigenin-7-O-glukosid in einer Menge von mindestens 0,1 Gew.-% in Bezug auf das Gewicht des von der Pflanze der Gattung *Matricaria* oder der Gattung *Chamaemelum* erhaltenen Extrakts enthält.

9. Zusammensetzung nach einem der vorhergehenden Ansprüche, wobei das Verhältnis des
(a) aus Rosmarin erhaltenen Extrakt
zu dem
(b) aus einer Pflanze der Gattung *Matricaria* oder der Gattung *Chamaemelum* erhaltenen Extrakt
30:1 bis 1:20 beträgt.

10. Nahrungsmittel, das eine Antioxidationsmittelzusammensetzung nach einem der vorhergehenden Ansprüche umfasst.

11. Nahrungsmittel nach Anspruch 10, wobei das Nahrungsmittel aus Mayonnaise, Salat-Dressings, Öl-in-Wasser-Emulsionen, Margarinen, fettarmen Aufstrichen, Wasser-in-Öl-Emulsionen, Milchprodukten, Käseaufstrichen, Schmelzkäse, Milchproduktdesserts, aromatisierten Milchen, Sahne, fermentierten Milchprodukten, Käse, Butter, Kondensmilchprodukten, Eiscrememischungen, Sojaprodukten, pasteurisiertem Flüssigei, Backwaren, Konfektwaren, Fruchtprodukten, Nahrungsmitteln mit Füllungen auf Fettbasis oder mit wasserhaltigen Füllungen, rohem Fleisch, gegartem Fleisch, rohen Geflügelprodukten, gegarten Geflügelprodukten, rohen Meeresfrüchteprodukten, gegarten Meeresfrüchteprodukten, verzehrsfertigen Mahlzeiten, Nudelsoßen und pasteurisierten Suppen ausgewählt ist.

12. Nahrungsmittel nach Anspruch 10, wobei es sich bei dem Nahrungsmittel um Mayonnaise handelt.

13. Verfahren zum Vorbeugen und/oder Hemmen der Oxidation eines Nahrungsmittels, wobei das Verfahren den Schritt umfasst, dass man das Nahrungsmittel mit
(a) einem von einer Pflanze erhaltenen Extrakt, wobei es sich bei der Pflanze um Rosmarin handelt, und
(b) einem von einer Pflanze der Gattung *Matricaria* oder der Gattung *Chamaemelum* erhaltenen Extrakt in Kontakt bringt.

14. Verwendung von
(a) einem von einer Pflanze erhaltenen Extrakt, wobei es sich bei der Pflanze um Rosmarin handelt, und
(b) einem von einer Pflanze der Gattung *Matricaria* oder der Gattung *Chamaemelum* erhaltenen Extrakt
zum Vorbeugen und/oder Hemmen der Oxidation eines Nahrungsmittels.

15. Kit zur Herstellung einer Zusammensetzung wie in einem der Ansprüche 1 bis 9 definiert, wobei das Kit
a) einen von einer Pflanze erhaltenen Extrakt, wobei es sich bei der Pflanze um Rosmarin handelt, und
(b) einen von einer Pflanze der Gattung *Matricaria* oder der Gattung *Chamaemelum* erhaltenen Extrakt
in separaten Verpackungen oder Behältnissen mit Anweisungen zum Zumischen und/oder Inkontaktbringen und/oder Verwenden umfasst.

## Revendications

1. Composition antioxydante comprenant
(a) un extrait obtenu à partir d'une plante, la plante étant le romarin,
(b) un extrait obtenu à partir d'une plante du genre *Matricaria* ou du genre *Chamaemelum.*

2. Composition selon la revendication 1 dans laquelle l'extrait (b) est d'une plante du genre *Matricaria.*

3. Composition selon la revendication 1 ou 2 dans laquelle l'extrait (b) est d'une plante de l'espèce *Matricaria recurtita.*

4. Composition selon la revendication 1, 2 ou 3 comprenant en outre
(c) un extrait obtenu à partir d'une plante de la famille *Cynara.*

5. Composition selon la revendication 4 dans laquelle la plante de la famille *Cynara* est *Cynara scolymus.*

6. Composition selon l'une quelconque des revendications précédentes dans laquelle l'extrait obtenu à partir de romarin contient des diterpènes phénoliques en une quantité d'au moins 1 % en poids sur la base du poids de l'extrait obtenu à partir du romarin.

7. Composition selon l'une quelconque des revendications précédentes dans laquelle l'extrait obtenu à partir de romarin contient de l'acide carnosique en une quantité d'au moins 1 % en poids sur la base du poids de l'extrait obtenu à partir du romarin.

8. Composition selon l'une quelconque des revendications précédentes dans laquelle l'extrait obtenu à partir de la plante du genre *Matricaria* ou du genre *Chamaemelum* contient de l'apigénine-7-0-glucoside en une quantité d'au moins 0,1 % en poids sur la base du poids de l'extrait obtenu à partir de la plante du genre *Matricaria* ou du genre *Chamaemelum.*

9. Composition selon l'une quelconque des revendications précédentes dans laquelle le rapport de
(a) l'extrait obtenu à partir de romarin
à
(b) l'extrait obtenu à partir d'une plante du genre *Matricaria* ou du genre *Chamaemelum*
et de 30:1 à 1:20.

10. Article d'alimentation comprenant une composition antioxydante selon l'une quelconque des revendications précédentes.

11. Article d'alimentation selon la revendication 10, l'article d'alimentation étant choisi parmi une mayonnaise, des vinaigrettes, des émulsions d'huile dans l'eau, des margarines, des pâtes à tartiner pauvres en graisses, des émulsions d'eau dans l'huile, des produits laitiers, des fromages à tartiner, du fromage fondu, des desserts laitiers, des laits aromatisés, de la crème, des produits laitiers fermentés, du fromage, du beurre, des produits de lait condensé, des mélanges pour crème glacée, des produits au soja, de l'oeuf liquide pasteurisé, des produits de boulangerie, des produits de confiserie, de produits à base de fruits, des aliments avec des garnitures à base de graisses ou contenant de l'eau, de la viande crue, de la viande cuite, des produits de volailles crues, des produits de volailles cuites, des produits de fruits de mer crus, des produits de fruits de mer cuits, des plats prêts à consommer, des sauces pour pâtes et des soupe pasteurisées.

12. Article d'alimentation selon la revendication 10, l'article d'alimentation étant une mayonnaise.

13. Procédé de prévention et/ou d'inhibition de l'oxydation d'un article d'alimentation, le procédé comprenant l'étape de mise en contact de l'article d'alimentation avec
(a) un extrait obtenu à partir d'une plante, la plante étant le romarin, et
(b) un extrait obtenu à partir d'une plante du genre *Matricaria* ou du genre *Chamaemelum.*

14. Utilisation de
(a) un extrait obtenu à partir d'une plante, la plante étant le romarin, et
(b) un extrait obtenu à partir d'une plante du genre *Matricaria* ou du genre *Chamaemelum,*
pour prévenir et/ou inhiber l'oxydation d'un article d'alimentation.

15. Kit de préparation d'une composition telle que définie dans l'une quelconque des revendications 1 à 9, le kit comprenant
(a) un extrait obtenu à partir d'une plante, la plante étant le romarin, et
(b) un extrait obtenu à partir d'une plante du genre *Matricaria* ou du genre *Chamaemelum,*
dans des emballages ou récipients séparés ; avec des instructions pour mélange et/ou mise en contact et/ou utilisation.
